# EUROPÄISCHE PATENTSCHRIFT

(11) **EP 4 157 712 B1**
(45) Veröffentlichungstag und Bekanntmachung des Hinweises auf die Patenterteilung: **04.03.2026**
(21) Anmeldenummer: 21729312.5
(22) Anmeldetag: 28.05.2021
(51) Int. Cl.: B63H 1/28, B63H 5/16, B63H 25/38

(54) **ANORDNUNG ZUR VERRINGERUNG EINES ANTRIEBSLEISTUNGSBEDARFS EINES WASSERFAHRZEUGS**
ARRANGEMENT FOR REDUCING A DRIVE POWER REQUIREMENT OF A WATERCRAFT
DISPOSITIF PERMETTANT DE RÉDUIRE LA DEMANDE DE PUISSANCE DE PROPULSION D'UN VÉHICULE MARIN

(30) Priorität: 28.05.2020 EP 20177194
(43) Veröffentlichungstag der Anmeldung: 05.04.2023
(73) Patentinhaber: Becker Marine Systems GmbH, 21079 Hamburg (DE)
(72) Erfinder: KUHLMANN, Henning, 21079 Hamburg21079 Hamburg (DE)
(74) Vertreter: RGTH
(86) Internationale Anmeldenummer: PCT/EP2021/064380
(87) Internationale Veröffentlichungsnummer: WO 2021/239963

(56) Entgegenhaltungen:
- EP-A1- 2 591 994
- EP-A2- 2 110 311
- WO-A1-2019/088696
- DE-A1- 3 245 125
- DE-U1- 202013 101 943

## Beschreibung

Die Erfindung betrifft eine Anordnung zur Verringerung eines Antriebsleistungsbedarfs eines Wasserfahrzeugs, insbesondere eines Schiffs, aufweisend mindestens ein Ruder und mindestens ein in Fahrtrichtung des Wasserfahrzeugs vor dem Ruder ausgebildeten Aufnahmeraum für einen Propeller. Des Weiteren betrifft die Erfindung ein Wasserfahrzeug mit einer derartigen Anordnung.

### Technologischer Hintergrund

Es sind bereits unterschiedliche Vorrichtungen zur Verringerung des Antriebsleistungsbedarfs eines Wasserfahrzeuges bekannt. Beispielsweise kann eine in Fahrtrichtung eines Wasserfahrzeugs vor dem Propeller vorgeschaltete Ringdüse eine Anströmung des Propellers optimieren und sich somit positiv auf einen Energieverbrauch des Wasserfahrzeugs auswirken. Ferner ist aus der EP 2 100 808 B1 eine einem Propeller vorgeschaltete Ringdüse mit innenliegenden Leitflächen bekannt, die ebenfalls zur Senkung des Energieverbrauchs des Wasserfahrzeugs beiträgt.

Des Weiteren sind aktive Vorrichtungen bekannt, welche die Reibungsverluste zwischen dem Wasser und dem Rumpf verringern. Derartige Vorrichtungen können durch Düsen Luftblasen erzeugen, welche sich entlang des Rumpfs verteilen und die Reibung des Rumpfs verringern, wodurch eine zusätzliche Energieeinsparung ermöglicht wird.

Die DE 20 2013 101943 U1 beschreibt eine Vorrichtung zur Verringerung des Antriebsleistungsbedarfs eines Wasserfahrzeugs, insbesondere eines Schiffes, umfassend eine Strömungsleitfläche, wobei von der Strömungsleitfläche mindestens ein erster Fin vorsteht, dadurch gekennzeichnet, dass ein erstes Ende des ersten Fins an der Strömungsleitfläche befestigt ist, und ein zweites Ende des ersten Fins als freies Ende ausgebildet ist.

Die EP 2 591 994 A1 beschreibt eine Vorrichtung zur Verringerung des Antriebsleistungsbedarfs eines Wasserfahrzeuges, die eine Vordüse umfasst, wobei von der Vordüse mindestens ein Außenfin nach außen vorsteht.

Die WO 2019/088696 A1 beschreibt einen Kanal, der vor einem Propeller angeordnet ist, eine Bogenform aufweist und Schub erzeugt; und eine Vielzahl von Vorverwirbelungsstatoren, die den Kanal an einem Schaftnabenabschnitt tragen und eine Verwirbelungsströmung in einer Richtung entgegengesetzt zu einer Drehrichtung des Propellers erzeugen.

Die EP 2 110 311 A2 beschreibt eine Flosse, die Schub in Vorwärtsrichtung erzeugt, indem sie aufsteigende, abfallende und verwirbelte Strömungen in der Nähe einer Ruderfläche nutzt und an einem Ruder angebracht ist, um die Antriebsleistung zu verbessern.

Die DE 32 45 125 A1 zeigt ein Ruder, an dem ein Leitkörper befestigt ist, der im wesentlichen axial zu einem vor dem Ruder angeordneten Schiffspropeller ausgerichtet ist. Der Leitkörper hat einen maximalen Durchmesser, der größer als der der Propellernabe ist.

### Darstellung der Erfindung: Aufgabe, Lösung, Vorteile

Der Erfindung liegt die Aufgabe zugrunde eine verbesserte Anordnung zum Verringern des Antriebsleistungsbedarfs bzw. zum Verringern eines Verbrauchs eines Wasserfahrzeugs zu schaffen.

Gemäß einem Aspekt der Erfindung wird diese Aufgabe gelöst durch eine Anordnung zur Verringerung eines Antriebsleistungsbedarfs eines Wasserfahrzeugs, insbesondere eines Schiffs. Die Anordnung kann vorzugsweise als eine Energiesparanordnung ausgestaltet sein und am Heck eines Schiffsrumpfs angeordnet sein.

Die Anordnung weist mindestens ein Ruder und mindestens ein in Fahrtrichtung eines Wasserfahrzeugs betrachtet vor dem Ruder ausgebildeten Aufnahmeraum für einen Propeller auf. Ferner ist in Fahrtrichtung des Wasserfahrzeugs betrachtet vor dem Aufnahmeraum des Propellers mindestens eine Vordüse, welche mindestens eine Leitfläche umfasst, angeordnet und an dem Ruder ist mindestens eine Seitenfinne angeordnet. Durch diese Maßnahme können mehrere Energiesparvorrichtungen miteinander kombiniert werden, welche überraschenderweise in einer weiter verbesserten Antriebskraft und somit in einer Treibstoffersparnis resultieren.

Je nach Anzahl der vorgesehenen Propeller am Heck des Schiffs können mehrere Vordüsen mit Leitflächen und mehrere Ruder mit Seitenfinnen eingesetzt werden. Bevorzugt ist jedem Propeller jeweils ein Ruder und eine Vordüse zugeordnet.

Die Anordnung kann insbesondere bei mittleren und großen Schiffen, zum Beispiel Containerschiffe, Stückgutschiffe, Massengutfrachter, Fähren oder Tanker, eingesetzt werden, um einen Treibstoffersparnis und somit reduzierte Betriebskosten des Schiffs zu realisieren. Insbesondere können die Schiffe mit eine Maximalgeschwindigkeit von mindestens 15 Knoten, bevorzugt mindestens 20 Knoten, besonders bevorzugt mindestens 24 Knoten aufweisen.

Das mindestens eine Ruder der Anordnung kann als ein so genanntes Vollschweberuder ausgestaltet sein, welches nur im oberen Bereich drehbar gelagert am Schiffsrumpf befestigt ist. Das mindestens eine Ruder kann dabei mithilfe eines Ruderschafts am Schiffsrumpf befestigt sein. Darüber hinaus kann das Ruder eine optionale Ruderbirne aufweisen.

Ferner bevorzugt kann das Ruder, insbesondere Vollschweberuder, als sogenanntes "twistiertes Ruder" ausgebildet sein. Hierbei kann insbesondere ein oberer Ruderblattabschnitt gegenüber einem unteren Ruderblattabschnitt im Bereich der Nasenleisten und/oder im Bereich der Endleisten des Ruders einen anderen Anstellwinkel gegenüber der Propellerströmung bzw. der Propellerströmungsrichtung aufweisen. Die Anstellwinkel des oberen und des unteren Ruderblattabschnitts können dabei konstant oder über die Höhe des jeweiligen Ruderblattabschnitts betrachtet kontinuierlich oder diskontinuierlich unterschiedlich sein.

In Fahrtrichtung des Wasserfahrzeugs vor dem Ruder ist ein Aufnahmeraum zum Aufnehmen von mindestens einem Propeller vorgesehen. Die Vordüse ist in Fahrtrichtung kurz vor dem Aufnahmeraum des Propellers angeordnet. Entsprechend sind das Ruder und die Vordüse derart voneinander beabstandet, dass zwischen beiden genügend Raum für die Vorsehung des Propellers (Aufnahmeraum) ist. Der Propeller kann bevorzugt eine Komponente der Anordnung sein. Die Vordüse umfassend die mindestens eine Leitfläche kann eine Anströmung des Propellers optimieren. Insbesondere kann hierdurch, insbesondere in bestimmten Bereichen der Propelleranströmung, eine Geschwindigkeitserhöhung der Propelleranströmung und/oder ein Drall, insbesondere ein zum Propellerdrall gegenläufiger Drall, erzeugt werden, was sich positiv auf den durch den Propeller erzeugten Schub auswirkt.

Das Ruder ist in der Nachlaufströmung des Propellers (Propellernachstrahl) angeordnet. Das Ruder wandelt einen Teil der Energie der Nachlaufströmung in Auftrieb um, dessen Vortriebskomponente den Antrieb des Schiffes unterstützt. Durch die wie vorstehend beschrieben optimierte Propelleranströmung erzeugt der Propeller einen vergrößerten Schub und somit eine energiereichere Nachlaufströmung. In einigen Bereichen der so erzeugten Nachlaufströmung treten jedoch überraschenderweise verstärkt Verwirbelungen auf. Durch die Vorsehung mindestens einer Seitenfinne an dem Ruder, insbesondere in denjenigen Bereichen der Nachlaufströmung in denen verstärkt Verwirbelungen auftreten, kann die Nachlaufströmung des Propellers weiter optimiert werden. Die Seitenfinne erzeugt einen Gegendrall in der Nachlaufströmung und verbessert hierdurch den Schub des Propellers. Ferner erzeugt die Seitenfinne einen zusätzlichen Auftrieb und hierdurch eine zusätzliche Vortriebskraft. Hierdurch kann der Schub des bereits optimiert angeströmten Propellers weiter verbessert der Treibstoffverbrauch weiter gesenkt bzw. die Antriebsleistung zusätzlich verbessert werden.

Der Aufnahmeraum des Propellers befindet sich in Fahrtrichtung bzw. in Strömungsrichtung zwischen der Vordüse und dem Ruder mit der mindestens einen Seitenfinne. Die Seitenfinne ist vorzugsweise seitlich am Ruder befestigt. Insbesondere kann die Seitenfinne auch an einer Ruderbirne des Ruders befestigt bzw. angeordnet sein, soweit das Ruder eine solche Ruderbirne aufweist.

Die Vordüse, die Seitenfinne und/oder die Leitfläche der Vordüse können vorzugsweise profiliert ausgestaltet sein, d.h. ein Tragflügelprofil aufweisen, und somit auf eine Wasserströmung einwirken.

Ein im Aufnahmeraum angeordneter Propeller kann besonders optimal angeströmt werden, wenn die Vordüse als eine Ringdüse oder als mindestens ein Ringdüsenausschnitt geformt ist, wobei die Vordüse zumindest bereichsweise einen Strömungskanal umfangsseitig begrenzt. Die Ringdüse ist dabei umfänglich geschlossen ausgebildet, wohingegen der Ringdüsenausschnitt umfänglich offen ist. Ringdüse und Ringdüsenausschnitt können rotationssymmetrisch oder rotationsasymmetrisch ausgebildet sein. Eine Strömungsgeschwindigkeit der Strömung im Strömungskanal bzw. im Nachlauf zum Strömungskanal wird hierbei erhöht. Durch die zusätzlich an der Vordüse vorhandene mindestens eine Leitfläche wird zusätzlich ein Drall, insbesondere ein Gegendrall, in der Propelleranströmung erzeugt. Durch diese Maßnahmenkann die Effizienz des Propellers erhöht werden.

Eine als Ringdüsenausschnitt geformte Vordüse kann eine Größe entsprechend einem Umfangbereich einer als Vollringdüse ausgestalteten Vordüse von beispielsweise größer als, kleiner als oder gleich 180°, 90°, oder 45° aufweisen. Dabei kann der Ringdüsenausschnitt einen beliebigen Winkelbereich abdecken bzw. aufspannen. Durch eine als Ringdüsenausschnitt geformte Vordüse kann eine Strömung gezielt und lokal konzentriert beeinflusst werden.

Gemäß einem weiteren Ausführungsbeispiel ist die mindestens eine Leitfläche der Vordüse in Form einer Finne ausgestaltet, welche an der Ringdüse oder dem mindestens einen Ringdüsenausschnitt angeordnet ist. Dabei kann die Finne vorzugsweise im Wesentlichen orthogonal zu der Ringdüse oder dem Ringdüsenausschnitt, insbesondere der Mantelfläche der Ringdüse bzw. des Ringdüsenausschnitts, ausgerichtet sein. Je nach Ausgestaltung kann die mindestens eine Leitfläche in Bezug auf die Fahrtrichtung des Wasserfahrzeugs mit oder ohne Anstellwinkel angeordnet sein.

Die mindestens eine Leitfläche kann innerhalb und/oder außerhalb des von der Vordüse gebildeten Strömungskanals angeordnet sein. Insbesondere wenn die Vordüse mehrere Leitflächen umfasst können innerhalb und außerhalb des Strömungskanals Leitflächen vorgesehen sein. Auch kann eine Leitfläche durch den Düsenmantel durchgehend und damit innerhalb und außerhalb des Strömungskanals angeordnet sein. Die Leitflächen können insbesondere im Hinblick auf eine Rotationsachse der Vordüse im Wesentlichen radial verlaufend angeordnet sein. Die Rotationsachse der Vordüse kann mit der Propellerachse zusammenfallen. Bevorzugt kann die Rotationsachse jedoch gegenüber der Propellerachse nach oben verschoben bzw. oberhalb der Propellerachse angeordnet sein. Die Rotationsachse der Vordüse kann parallel oder geneigt zur Propellerachse angeordnet sein.

Die mindestens eine Finne kann auf eine Strömung außerhalb des Strömungskanals einwirken, wenn diese von einer äußeren Mantelfläche der Ringdüse oder des Ringdüsenausschnitts absteht. Durch diese Maßnahme kann die durch die Ringdüse oder den Ringdüsenausschnitt nicht beschleunigte Strömung außerhalb des Strömungskanals mit einem Drall bzw. Gegendrall induziert werden. Auch ist es hierdurch möglich, kleinere Düsendurchmesser anzuwenden, was insgesamt den Widerstand der Vordüse verringert.

Ferner bevorzugt können bei Ausführungen der Vordüse, die mehrere Leitflächen umfassen, diese innerhalb und/oder außerhalb der Vordüse asymmetrisch verteilt angeordnet sein.

Nach einer weiteren Ausführungsform ist die mindestens eine Leitfläche als eine Haltestrebe der Vordüse ausgestaltet. Hierdurch kann die mindestens eine Leitfläche zusätzlich zu der Beeinflussung der Strömung die Aufgabe der Befestigung der Vordüse am Schiffsrumpf erfüllen. Die derart ausgebildete Leitfläche ist bevorzugt innerhalb des Strömungskanals der Vordüse angeordnet und ist mit einem Ende an der Ringdüse bzw. dem Ringdüsenabschnitt befestigt und mit ihrem anderen Ende am Schiffsrumpf, insbesondere im Bereich des Stevenrohrs.

Eine zusätzliche Optimierung der Strömung im Strömungskanal kann dadurch realisiert werden, dass die mindestens eine Leitfläche vollständig oder teilweise im Strömungskanal der Vordüse angeordnet ist. Durch diese Maßnahme kann die Strömung des Wassers im Strömungskanal dahingehend beeinflusst werden, dass der Propeller in einem Bereich nahe der Rotationsachse mit weniger Verwirbelungen angeströmt wird.

Gemäß einem weiteren Ausführungsbeispiel erstreckt sich die mindestens eine Leitfläche strahlenförmig und/oder radial von einer Rotationsachse der Vordüse aus über die Ringdüse oder den Ringdüsenausschnitt hinaus. Durch diese Maßnahme kann eine besonders symmetrische Vordüse mit Leitflächen realisiert werden. Die Leitflächen fungieren gleichzeitig als Befestigungselemente der Vordüse und ermöglichen eine positive Beeinflussung der gesamten Anströmung des Propellers im Aufnahmeraum. Insbesondere ist hierbei eine Leitfläche sowohl innerhalb als auch außerhalb des Strömungskanals der Vordüse angeordnet. Weiter bevorzugt ist die Länge der Leitflächen bei dieser Ausführungsform größer als die Länge der mindestens einen Seitenfinne.

Eine weitere Steuerung der Anströmung des Propellers kann dadurch erzielt werden, dass die Vordüse mehrere Leitflächen aufweist, welche gleichmäßig oder ungleichmäßig verteilt sind. Insbesondere können hierdurch vordefinierte lokale Bereiche der Strömung, welche zum Propeller geleitet werden, gezielt beeinflusst, insbesondere mit einem Gegendrall induziert, werden.

Erfindungsgemäß sind die Vordüse mit der mindestens einen Leitfläche und die mindestens eine Seitenfinne asymmetrisch gegenüber dem Ruder angeordnet, derart, dass bei nicht ausgelenkter Ruderstellung die mindestens eine Seitenfinne zu einer Seite des Ruders und die Vordüse mit der mindestens einen Leitfläche mit einem überwiegender Anteil, bevorzugt vollständig, zu einer anderen Seite des Ruders angeordnet ist. Bevorzugt erstreckt sich dabei die Vordüse mit der mindestens einen Leitfläche über eine erste Seitenfläche des Ruders und die mindestens eine Seitenfinne über eine zweite Seitenfläche des Ruders hinaus. Die nicht ausgelenkte Ruderstellung ist die Nullstellung, bei der der Ruderwinkel Null ist (z.B. bei Geradeausfahrt des Wasserfahrzeugs). Insbesondere bei der Betrachtung aus einer Hinteransicht auf die Anordnung bzw. das Wasserfahrzeug ergibt sich die asymmetrische Anordnung, bei der die Seitenfinne zu einer Seite des Ruders und die Vordüse mit der mindestens einen Leitfläche mit einem überwiegender Anteil bevorzugt vollständig, zu einer anderen Seite des Ruders angeordnet ist. Bei dieser Anordnung sind genau eine Vordüse und ein oder mehrere Seitenfinnen vorhanden, wobei die ein oder mehreren Seitenfinnen alle zur selben Seite des Ruders angeordnet sind. Hierbei ist auf derjenigen Seite des Ruders, an der die Vordüse überwiegend oder vollständig angeordnet ist, keine Seitenfinne vorgesehen. Insbesondere ist es bevorzugt, dass die Mehrzahl der Leitflächen der Vordüse, bevorzugt alle Leitflächen, auf der der Seitenfinne gegenüberliegenden Seite des Ruders, d.h. auf der anderen Seite des Ruders, angeordnet sind.

Darüber hinaus kann bei Anordnungen mit mehr als einem Ruder die Vordüse mit einem überwiegender Anteil bevorzugt vollständig, zu einer Seite des einen Ruders und die Seitenfinne zu einer Seite des anderen Ruders angeordnet sein, insbesondere derart, dass die Vordüse und die Seitenfinne an gegenüberliegenden Seiten der beiden Ruder angeordnet sind.

Eine asymmetrische Anordnung der Vordüse und der Seitenfinne hat besonders große hydrodynamische Vorteile und verringert den Antriebsleistungsbedarf eines Wasserfahrzeugs weiter. So treten in der Anströmung auf den Propeller bereichsweise, bei rechtsdrehenden Propellern insbesondere in einem Bereich von ca. 08:00 Uhr bis 12:00 Uhr in einer Hinteransicht des Propellers betrachtet, häufig Verwirbelungen auf. Durch die Anordnung der Vordüse mit ihrer mindestens einen Leifläche in diesem Bereich, d.h. überwiegend oder vollständig zu einer Seite des Ruders, wird in der Anströmung an der geeigneten Stelle ein Gegendrall erzeugt, wodurch die Verwirbelungen in der Anströmung beim Aufprall auf den Propeller reduziert sind und der Wirkungsgrad des Propellers erhöht wird. Es hat sich nunmehr in von der Anmelderin durchgeführten Versuchen und Simulationen überraschenderweise gezeigt, dass bei derartiger Vorsehung einer Vordüse im Nachstrom des Propellers häufig auf der gegenüberliegenden (anderen) Seite des Ruders verstärkt Verwirbelungen auftreten, so dass eine Vorsehung der mindestens einen Seitenfinne an dieser Seite besonders vorteilhaft ist, da hierdurch die Seitenfinne die Nachströmung im Bereich von deren stärksten Verwirbelungen positiv beeinflusst und insbesondere die Verwirbelungen durch Erzeugung eines Gegendralls reduziert. Bei rechtsdrehenden Propellern treten diese Verwirbelungen im Nachstrom häufig in einem Bereich von ca. 02:00 Uhr bis 04:00 Uhr in einer Hinteransicht des Propellers betrachtet auf, so dass es besonders vorteilhaft sein kann, die mindestens eine Seitenfinne in diesem Bereich vorzusehen.

Gemäß einer weiteren nicht-erfindungsgemäßen Ausführungsform sind die Vordüse mit der mindestens einer Leitfläche und die mindestens eine Seitenfinne symmetrisch gegenüber dem Ruder angeordnet, derart, dass die Vordüse und/oder die mindestens eine Leitfläche sowohl zu einer Seite des Ruders als auch zu der anderen Seite des Ruders angeordnet ist. Entsprechend erstrecken sich bevorzugt die Vordüse und/oder die mindestens eine Leitfläche über die erste Seitenfläche und die zweite Seitenfläche des Ruders hinaus. Ferner sind mindestens eine Seitenfinne an der ersten Seitenfläche und mindestens eine Seitenfinne an der zweiten Seitenfläche des Ruders angeordnet. Bei einer derartigen Anordnung kann ein gesamtes Anströmungsvolumen des Propellers und Abströmungsvolumen des Propellers mithilfe der Vordüse und der Seitenfinnen optimiert werden.

Die mindestens eine Seitenfinne ist bevorzugt einendseitig an dem Ruder, insbesondere einer Seitenfläche des Ruders und/oder einer Ruderbirne befestigt. Das andere Ende der mindestens einen Seitenfinne ist bevorzugt als freies Ende ausgebildet.

Die mindestens eine Seitenfinne kann technisch besonders einfach ausgestaltet und an dem Ruder befestigt sein, wenn sie im Wesentlichen in einem rechten Winkel zu der ersten Seitenfläche und/oder der zweiten Seitenfläche des Ruders ausgerichtet ist.

Bei einer weiteren Ausgestaltung ist die mindestens eine Seitenfinne in einem Winkel zu der ersten Seitenfläche und/oder der zweiten Seitenfläche des Ruders ausgerichtet, welcher kleiner als 90°, bevorzugt kleiner als 75°, besonders bevorzugt kleiner als 60°, ist.

Insbesondere kann durch ein Reduzieren des Winkels zwischen der Seitenfinne und einer Seitenfläche des Ruders eine Breite des Ruders verringert werden. Hierdurch kann eine Beschädigungsgefahr der Seitenfinne im Betrieb des Wasserfahrzeugs gesenkt werden und/oder der Widerstand der Anordnung kann verringert werden. Ein ähnlicher Effekt kann durch ein Einstellen einer Länge der Seitenfinne realisiert werden.

Sind mehr als eine Seitenfinne vorhanden, sind diese ausschließlich an einer Seitenfläche des Ruders angeordnet.

Eine weitere Optimierung der von Propeller erzeugten Strömung kann erreicht werden, wenn die mindestens eine Seitenfinne eine Pfeilung aufweist. Darüber hinaus ermöglicht eine Pfeilung der Seitenfinne ein verbessertes Abgleiten von Treibgut und reduziert die Wahrscheinlichkeit einer Beschädigung.

Gemäß einer weiteren Ausführungsform weist die mindestens eine am Ruder befestigte Seitenfinne eine endseitig angeordnete Kappe oder ein endseitig angeordnetes Winglet auf. Insbesondere kann an einem freien Ende bzw. an einer freien Kante der Seitenfinne eine Kappe oder ein Winglet ausgebildet oder befestigt sein. Durch diese Maßnahme kann ein Ablösen der Strömung von einer Kante der Seitenfinne vereinfacht und der hydrodynamische Widerstand der Seitenfinne reduziert werden. Gemäß einem weiteren Aspekt der Erfindung wird ein Wasserfahrzeug bereitgestellt, welches eine vorbeschriebene Anordnung aufweist. Die Anordnung kann sämtliche vorgeschriebenen Ausgestaltungen aufweisen. Das Wasserfahrzeug kann vorzugsweise ein Schiff sein, welches einen Rumpf mit mindestens einem am Heck angeordneten Ruder aufweist.

Das mindestens eine Ruder kann beispielsweise als ein Vollschweberuder ausgeführt und somit entlang einer Ruderachse schwenkbar mit dem Rumpf verbunden sein.

In Fahrtrichtung des Wasserfahrzeugs vor dem Ruder sind ein Aufnahmeraum und ein im Aufnahmeraum angeordneter Propeller vorgesehen. Der Aufnahmeraum kann sich quer zur Fahrtrichtung über mehrere parallel angeordnete Ruder erstrecken und einen oder mehrere Propeller aufnehmen können.

Durch das Ausrüsten des Wasserfahrzeugs mit der Anordnung werden in Fahrtrichtung vor dem Propeller und hinter dem Propeller kombinatorisch wirkende Energiesparvorrichtungen eingesetzt, um die Effizienz des Propellers und des Wasserfahrzeugs zu steigern. Bevorzugterweise kann vor dem Propeller und dem Aufnahmeraum eine Vordüse mit mindestens einer Leitfläche positioniert werden, um eine Anströmung des Propellers zu begünstigen.

Bei mehreren im Aufnahmeraum positionierten Propellern können optional auch mehrere Vordüsen mit Leitflächen eingesetzt werden.

In Fahrtrichtung des Wasserfahrzeugs hinter dem Propeller und dem Aufnahmeraum kann eine Nachlaufströmung des Propellers durch mindestens eine am Ruder befestigte Seitenfinne optimiert werden.

Es können eine oder mehrere Seitenfinnen pro Ruder verwendet werden. Durch die Seitenfinnen kann beispielsweise der vom Propeller erzeugte Schub in Fahrtrichtung ausgerichtet und somit verstärkt werden.

### Kurzbeschreibung der Figuren

Nachstehend werden mehrere Ausführungsbeispiele der Erfindung anhand der Zeichnungen näher erläutert. Es zeigen:
- Fig. 1: eine Seitenansicht eines Heckbereichs eines Wasserfahrzeugs mit einer Anordnung gemäß einer ersten nicht-erfindungsgemäßen Ausführungsform,
- Fig. 2: eine Draufsicht auf den Heckbereichs des Wasserfahrzeugs mit einer Anordnung gemäß einer zweiten Ausführungsform,
- Fig. 3: eine perspektivische Darstellung des Heckbereichs des Wasserfahrzeugs mit einer Anordnung gemäß einer dritten Ausführungsform, und
- Fig. 4: eine weitere perspektivische Darstellung des Heckbereichs des Wasserfahrzeugs mit einer Anordnung gemäß der dritten Ausführungsform.

### Ausführliche Beschreibung der Figuren

In den Figuren weisen dieselben konstruktiven Elemente jeweils dieselben Bezugsziffern auf.

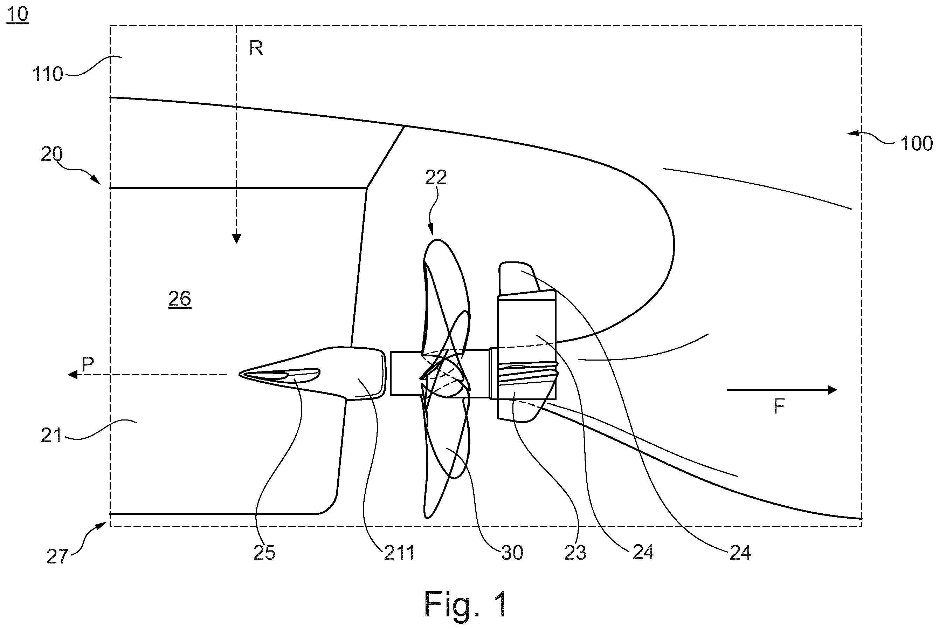

Die Fig. 1 zeigt eine Seitenansicht eines Heckbereichs 10 eines Wasserfahrzeugs 100 mit einer Anordnung 20 gemäß einer ersten nicht-erfindungsgemäßen Ausführungsform. Dabei ist insbesondere der Heckbereich 10 des Rumpfs 110 des Wasserfahrzeugs 100 dargestellt.

Die Anordnung 20 dient zur Verringerung eines Antriebsleistungsbedarfs des Wasserfahrzeugs 100. Im dargestellten Ausführungsbeispiel ist das Wasserfahrzeug (100) als Schiff ausgestaltet. Die Anordnung 20 weist beispielhaft nur ein Ruder 21 auf, welches entlang einer Ruderachse R verschwenkbar ist.

In Fahrtrichtung F des Wasserfahrzeugs 100 ist vor dem Ruder 21 ein Aufnahmeraum 22 vorgesehen. In dem Aufnahmeraum 22 ist beispielhaft einen Propeller 30 positioniert.

Der Propeller 30 dient zum Antrieb des Wasserfahrzeugs 100 und ist um eine Rotationsachse P des Propellers 30 (Propellerachse) drehbar und antreibbar.

In Fahrtrichtung F des Wasserfahrzeugs 100 vor dem Aufnahmeraum 22 des Propellers 30 ist eine Vordüse 23 mit mehreren Leitflächen 24 angeordnet. Gemäß dem dargestellten Ausführungsbeispiel spannt die Vordüse 24 einen Winkelbereich von 180° auf und bildet somit einen etwa halbkreisförmigen Ringdüsenausschnitt.

Darüber hinaus weist die Anordnung 20 zwei Seitenfinnen 25 auf (aufgrund der Seitenansicht der Fig. 1 ist nur eine Seitenfinne dargestellt; die nicht dargestellte Seitenfinne ist analog zur dargestellten Seitenfinne auf der nicht dargestellten Seite des Ruders angeordnet). Die Seitenfinnen 25 sind auf jeder Seitenfläche 26, 27 des Ruders 21 befestigt. Somit ist die Anordnung 20 symmetrisch ausgestaltet.

Die Seitenfinnen 25 sind auf Höhe der Rotationsachse P des Propellers 30 mit dem Ruder 21 verbunden. In der dargestellten Ausführungsform sind die Seitenfinnen im Bereich einer Ruderbirne 211 an dem Ruder 21 befestigt.

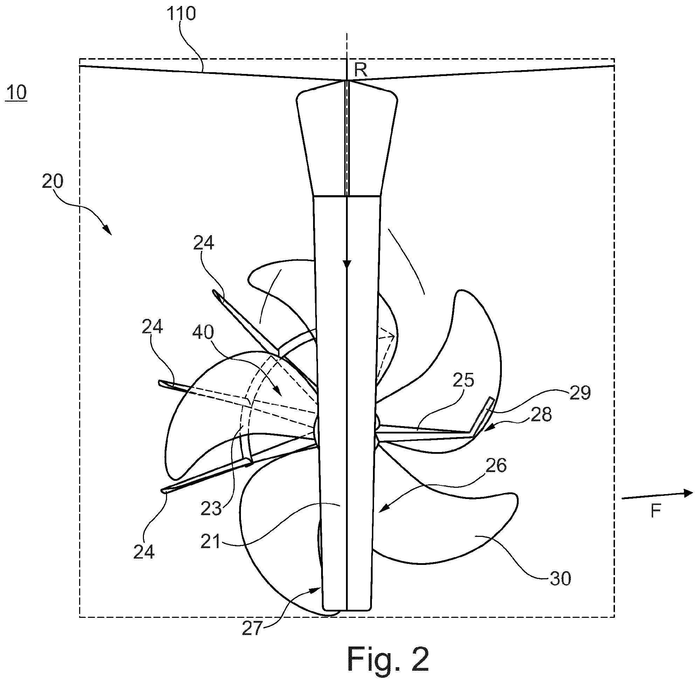

In der Fig. 2 ist eine Draufsicht auf den Heckbereichs 10 des Wasserfahrzeugs 100 mit einer Anordnung 20 gemäß einer zweiten Ausführungsform dargestellt. Im Unterschied zum ersten Ausführungsbeispiel ist die Anordnung 20 asymmetrisch ausgestaltet. Dabei ragt die Vordüse 23 mit mehreren Leitflächen 24 über eine zweite Seitenfläche 27 seitlich hinaus. Die Vordüse 23 ist insbesondere mit ihrem überwiegender Teil zu einer Seite (der in Figur dargestellten linken Seite des Ruders (Backbordseite) des Ruders 21 angeordnet, nur ein kleiner Teilbereich ragt über die andere Seite (Steuerbordseite) des Ruders 21 hinaus. Die Vordüse 23 spannt dabei einen Winkelbereich von ungefähr 120° auf. Dabei ist die Vordüse 23 als ein profilierter Ringdüsenausschnitt geformt.

Die Vordüse 23 begrenzt zumindest bereichsweise umfangsseitig einen Strömungskanal 40. Die Leitflächen 24 weisen ebenfalls eine Profilierung auf und ragen strahlenförmig ausgehend von der Rotationsachse der Vordüse, die in dem gezeigten Ausführungsbeispiel mit der Rotationsachse P des Propellers 30 zusammenfällt, durch den Strömungskanal 40 und durch die Vordüse 23 hindurch. Dabei sind beispielhaft drei Leitflächen 24 vorgesehen, welche entlang der Rotationsachse P des Propellers 30 unter gleichmäßigen Winkeln zueinander angeordnet sind.

Die Seitenfinne 25 ist an einer ersten Seitenfläche 26 des Ruders 21 befestigt. Die Seitenfinne 25 ist somit an der anderen Seite des Ruders 21 im Vergleich zum überwiegenden Teil der Vordüse 23 angeordnet. An der zweiten Seitenfläche 27 ist keine Seitenfinne vorgesehen. An einem freien Ende 28 der Seitenfinne 25 ist beispielhaft ein Winglet 29 angeordnet. Das Winglet 29 kann dabei integral mit der Seitenfinne 25 ausgestaltet oder nachträglich mit der Seitenfinne 25 verbunden sein.

Das Winglet 29 kann dabei in Richtung des Rumpfs 110 und/oder von dem Rumpf 110 des Wasserfahrzeugs 100 weggerichtet sein.

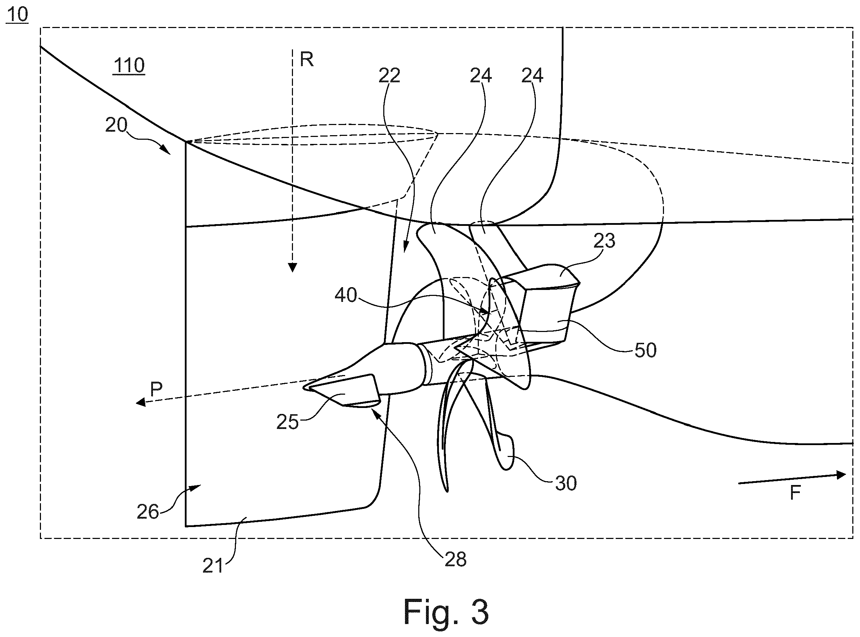

Die Fig. 3 zeigt eine perspektivische Darstellung des Heckbereichs 10 des Wasserfahrzeugs 100 mit einer Anordnung 20 gemäß einer dritten Ausführungsform. Im Unterschied zu der in Fig. 2 gezeigten Ausführungsform, weist die Anordnung 20 eine Seitenfinne 25 auf, welche eine Pfeilung entgegen der Fahrtrichtung F und kein Winglet aufweist. Ansonsten ist die dritte Ausführungsform identisch zur zweiten Ausführungsform ausgebildet.

Des Weiteren ist in Fig. 3 veranschaulicht, dass mindestens eine Leitfläche 50 als eine Haltestrebe der Vordüse 23 am Rumpf 110 des Wasserfahrzeugs 100 ausgestaltet ist.

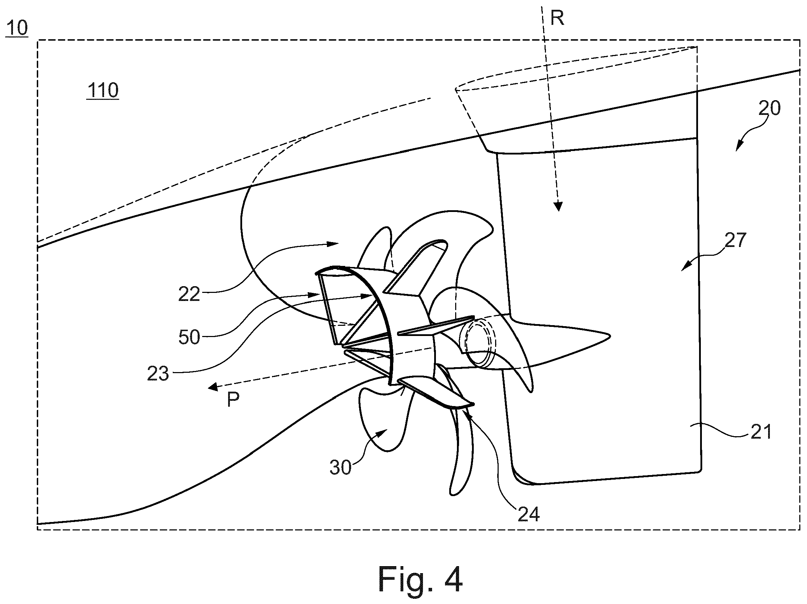

In der Fig. 4 ist eine weitere perspektivische Darstellung des Heckbereichs 10 des Wasserfahrzeugs 100 mit einer Anordnung 20 gemäß der dritten Ausführungsform aus Fig. 3 dargestellt. Dabei wird der asymmetrische Aufbau der Anordnung 20 verdeutlicht. Alternativ zu einer als Ringdüsenausschnitt ausgestalteten Vordüse 23 kann diese als eine Ringdüse geformt sein, welche einen 360° Winkelbereich abdeckt und bevorzugt parallel zum Propeller 30 positioniert ist.

### Bezugszeichenliste

100 Wasserfahrzeug
110 Rumpf
10 Heckbereich
20 Anordnung / Energiesparanordnung
21 Ruder
211 Ruderbirne
22 Aufnahmeraum
23 Vordüse
24 Leitfläche
25 Seitenfinne
26 erste Seitenfläche des Ruders
27 zweite Seitenfläche des Ruders
28 freies Ende / Kante der Seitenfinne
29 Winglet
30 Propeller
40 Strömungskanal
50 als Haltestrebe ausgestaltete Leitfläche
F Fahrtrichtung
P Rotationsachse des Propellers
R Ruderachse

## Patentansprüche

1. Anordnung (20) zur Verringerung eines Antriebsleistungsbedarfs eines Wasserfahrzeugs (100), insbesondere eines Schiffs, aufweisend mindestens ein Ruder (21) und mindestens ein in Fahrtrichtung (F) des Wasserfahrzeugs (100) vor dem Ruder (21) ausgebildeten Aufnahmeraum (22) für einen Propeller (30), wobei in Fahrtrichtung (F) vor dem Aufnahmeraum (22) des Propellers (30) mindestens eine Vordüse (23) aufweisend mindestens eine Leitfläche (24) angeordnet ist, **dadurch gekennzeichnet, dass** an dem Ruder (21) mindestens eine Seitenfinne (25) angeordnet ist, wobei die Vordüse (23) mit der mindestens einen Leitfläche (24) und die mindestens eine Seitenfinne (25) asymmetrisch gegenüber dem Ruder (21) angeordnet sind, derart, dass bei nicht ausgelenkter Ruderstellung die mindestens eine Seitenfinne (25) zu einer Seite des Ruders (21) und die Vordüse (23) mit der mindestens einen Leitfläche (24) mit einem überwiegenden Anteil, bevorzugt vollständig, zu einer anderen Seite des Ruders (21) angeordnet ist und derart, dass auf derjenigen Seite des Ruders (21), an der die Vordüse (23) überwiegend oder vollständig angeordnet ist, keine Seitenfinne (25) angeordnet ist.

2. Anordnung nach Anspruch 1, wobei die Vordüse (23) als eine Ringdüse oder als mindestens ein Ringdüsenausschnitt geformt ist, wobei die Vordüse (23) zumindest bereichsweise einen Strömungskanal (40) umfangsseitig begrenzt.

3. Anordnung nach Anspruch 2, wobei die mindestens eine Leitfläche (24) der Vordüse (23) in Form einer Finne ausgestaltet ist, welche an der Ringdüse oder dem mindestens einen Ringdüsenausschnitt angeordnet ist.

4. Anordnung nach Anspruch 3, wobei die mindestens eine als Finne ausgestaltete Leitfläche (24) von einer äußeren Mantelfläche der als Ringdüse oder als Ringdüsenausschnitt ausgestalteten Vordüse (23) absteht.

5. Anordnung nach einem der vorhergehenden Ansprüche, wobei die mindestens eine Leitfläche (24) als eine Haltestrebe (50) der Vordüse (23) ausgestaltet ist.

6. Anordnung nach einem der vorhergehenden Ansprüche, wobei die mindestens eine Leitfläche (24) im Strömungskanal (40) der Vordüse (23) angeordnet ist.

7. Anordnung nach einem der Ansprüche 2 bis 6, wobei sich die mindestens eine Leitfläche (24) strahlenförmig und/oder radial von einer Rotationsachse der Vordüse (23) aus über die Ringdüse oder den Ringdüsenausschnitt hinaus erstreckt.

8. Anordnung nach einem der vorhergehenden Ansprüche, wobei die Vordüse (23) mehrere Leitflächen (24, 50) aufweist, welche gleichmäßig oder ungleichmäßig verteilt sind.

9. Anordnung nach einem der Ansprüche 1 bis 8, wobei die mindestens eine Seitenfinne (25) im Wesentlichen in einem rechten Winkel zu der ersten Seitenfläche (26) und/oder der zweiten Seitenfläche (27) des Ruders (21) ausgerichtet ist.

10. Anordnung nach einem der vorhergehenden Ansprüche, wobei die mindestens eine Seitenfinne (25) in einem Winkel zu der ersten Seitenfläche (26) und/oder der zweiten Seitenfläche (27) des Ruders (21) ausgerichtet ist, welcher kleiner als 90°, bevorzugt kleiner als 75°, besonders bevorzugt kleiner als 60°, ist.

11. Anordnung nach einem der vorhergehenden Ansprüche, wobei die mindestens eine Seitenfinne (25) eine Pfeilung aufweist.

12. Anordnung nach einem der vorhergehenden Ansprüche, wobei die mindestens eine am Ruder (21) befestigte Seitenfinne (25) eine endseitig angeordnete Kappe oder ein endseitig angeordnetes Winglet (29) aufweist.

13. Wasserfahrzeug (100), insbesondere ein Schiff, aufweisend eine Anordnung (20) gemäß einem der vorhergehenden Ansprüche.

## Claims

1. Arrangement (20) for reducing a propulsion power requirement of a watercraft (100), in particular a ship, having at least one rudder (21) and at least one receiving space (22) for a propeller (30) formed in front of the rudder (21) in the direction of travel (F) of the watercraft (100), wherein at least one pre-nozzle (23) having at least one guide surface (24) is arranged in front of the receiving space (22) of the propeller (30) in the direction of travel (F), **characterized in that** at least one side fin (25) is arranged at the rudder (21),
wherein the pre-nozzle (23) with the at least one guide surface (24) and the at least one side fin (25) are arranged asymmetrically relative to the rudder (21) in such a way that, when the rudder is not deflected, the at least one side fin (25) is arranged on one side of the rudder (21) and the pre-nozzle (23) with the at least one guide surface (24) is arranged predominantly, preferably completely, on the other side of the rudder (21), and such that no side fin (25) is arranged on the side of the rudder (21) on which the pre-nozzle (23) is predominantly or completely arranged.

2. Arrangement according to claim 1, wherein the pre-nozzle (23) is shaped as a ring nozzle or as at least one ring nozzle cutout, wherein the pre-nozzle (23) delimits a flow channel (40) at least in some areas on the circumference.

3. Arrangement according to claim 2, wherein the at least one guide surface (24) of the pre-nozzle (23) is designed in the form of a fin which is arranged at the ring nozzle or the at least one ring nozzle cutout.

4. Arrangement according to claim 3, wherein the at least one guide surface (24) designed as a fin protrudes from an outer shell surface of the pre-nozzle (23) designed as a ring nozzle or as a ring nozzle cutout.

5. Arrangement according to one of the preceding claims, wherein the at least one guide surface (24) is designed as a retaining strut (50) of the pre-nozzle (23).

6. Arrangement according to one of the preceding claims, wherein the at least one guide surface (24) is arranged in the flow channel (40) of the pre-nozzle (23).

7. Arrangement according to one of claims 2 to 6, wherein the at least one guide surface (24) extends radiantly and/or radially from a rotation axis of the pre-nozzle (23) beyond the ring nozzle or the ring nozzle cutout.

8. Arrangement according to one of the preceding claims, wherein the pre-nozzle (23) has several guide surfaces (24, 50) which are distributed evenly or unevenly.

9. Arrangement according to one of claims 1 to 8, wherein the at least one side fin (25) is aligned substantially at a right angle to the first side surface (26) and/or the second side surface (27) of the rudder (21).

10. Arrangement according to one of the preceding claims, wherein the at least one side fin (25) is aligned at an angle to the first side surface (26) and/or the second side surface (27) of the rudder (21) which is less than 90°, preferably less than 75°, particularly preferably less than 60°.

11. Arrangement according to one of the preceding claims, wherein the at least one side fin (25) has a sweep angle.

12. Arrangement according to one of the preceding claims, wherein the at least one side fin (25) attached to the rudder (21) has a cap or winglet (29) arranged at the end.

13. Watercraft (100), in particular a ship, having an arrangement (20) according to one of the preceding claims.

## Revendications

1. Dispositif (20) destiné à réduire une demande de puissance de propulsion d'un bateau (100), en particulier d'un navire, comprenant au moins un gouvernail (21) et au moins un espace de réception (22) pour une hélice (30) formé dans le sens de la marche (F) du bateau (100) devant le gouvernail (21), dans lequel au moins une tuyère avant (23) comportant au moins une surface de guidage (24) est disposée dans le sens de marche (F) devant l'espace de logement (22) de l'hélice (30), **caractérisé en ce qu'**au moins une ailette latérale (25) est disposée sur le gouvernail (21),
la tuyère avant (23) avec l'au moins une surface de guidage (24) et l'au moins une ailette latérale (25) étant disposées de manière asymétrique par rapport au gouvernail (21), de telle sorte que, lorsque le gouvernail n'est pas dévié, l'au moins une ailette latérale (25) se trouve d'un côté du gouvernail (21) et la tuyère avant (23) avec l'au moins une surface de guidage (24) est disposée en grande partie, de préférence entièrement, d'un autre côté du gouvernail (21) et de telle sorte qu'aucune ailette latérale (25) n'est disposée du côté du gouvernail (21) où la tuyère avant (23) est disposée en grande partie ou entièrement.

2. Dispositif selon la revendication 1, dans laquelle la tuyère avant (23) est formée comme une tuyère annulaire ou comme au moins une découpe de tuyère annulaire, la tuyère avant (23) délimitant au moins par zones un canal d'écoulement (40) sur le pourtour.

3. Dispositif selon la revendication 2, dans lequel l'au moins une surface de guidage (24) de la tuyère avant (23) est conçue sous la forme d'une ailette qui est disposée sur la tuyère annulaire ou sur l'au moins une découpe de tuyère annulaire.

4. Dispositif selon la revendication 3, dans lequel l'au moins une surface de guidage (24) conçue comme une ailette dépasse d'une surface d'enveloppe extérieure de la tuyère avant (23) conçue comme une tuyère annulaire ou comme une découpe de tuyère annulaire.

5. Dispositif selon l'une des revendications précédentes, dans lequel l'au moins une surface de guidage (24) est conçue comme une entretoise de maintien (50) de la tuyère avant (23).

6. Dispositif selon l'une des revendications précédentes, dans lequel l'au moins une surface de guidage (24) est disposée dans le canal d'écoulement (40) de la tuyère avant (23).

7. Dispositif selon l'une des revendications 2 à 6, dans lequel l'au moins une surface de guidage (24) s'étend de manière rayonnante et/ou radiale à partir d'un axe de rotation de la tuyère avant (23) au-delà de la tuyère annulaire ou de la découpe de tuyère annulaire.

8. Dispositif selon l'une des revendications précédentes, la tuyère avant (23) comportant plusieurs surfaces de guidage (24, 50) qui sont réparties de manière régulière ou irrégulière.

9. Dispositif selon l'une des revendications 1 à 8, dans lequel l'au moins une ailette latérale (25) est orientée sensiblement à un angle droit par rapport à la première surface latérale (26) et/ou à la deuxième surface latérale (27) du gouvernail (21).

10. Dispositif selon l'une des revendications précédentes, dans lequel l'au moins une ailette latérale (25) est orientée selon un angle par rapport à la première surface latérale (26) et/ou à la deuxième surface latérale (27) du gouvernail (21) qui est inférieur à 90°, de préférence inférieur à 75°, de manière particulièrement préférée inférieur à 60°.

11. Dispositif selon l'une des revendications précédentes, dans lequel l'au moins une ailette latérale (25) présente une flèche.

12. Dispositif selon l'une des revendications précédentes, dans lequel l'au moins une ailette latérale (25) fixée au gouvernail (21) présente un capuchon ou une ailette (29) disposé(e) à son extrémité.

13. Bateau (100), en particulier un navire, présentant un dispositif (20) selon l'une des revendications précédentes.
